# EUROPÄISCHE PATENTSCHRIFT

(11) **EP 1 351 004 B1**
(45) Veröffentlichungstag und Bekanntmachung des Hinweises auf die Patenterteilung: **10.08.2005**
(21) Anmeldenummer: 03005198.1
(22) Anmeldetag: 08.03.2003
(51) Int. Cl.: F16L 23/032, B21D 19/04

(54) **Stossverbindung zwischen zwei Rohrabschnitten aus Blech und Verfahren zu deren Herstellung**
Butt joint between two duct sections made of sheet metal and method of production thereof
Joint droit entre deux segments de conduit en tôle et procédé de production

(30) Priorität: 05.04.2002 DE 10215112
(43) Veröffentlichungstag der Anmeldung: 08.10.2003
(73) Patentinhaber: METU-SYSTEM MEINIG KG, 78604 Rietheim-Weilheim (DE)
(72) Erfinder: Meinig, Manfred, 78604 Rietheim-Weilheim (DE)
(74) Vertreter: Patentanwälte Westphal, Mussgnug & Partner

(56) Entgegenhaltungen:
- WO-A-02/24369
- WO-A-97/23743
- DE-C- 3 537 504
- GB-A- 561 684
- US-A- 3 889 581
- US-A- 4 466 641

## Beschreibung

Die Erfindung betrifft ein Verfahren zur Herstellung eines Verbindungsflansches nach dem Oberbegriff des Patentanspruchs 1, sowie eine Stoßverbindung nach dem Oberbegriff des Anspruchs 4.

Eine nach einem Verfahren dieser Art hergestellte Stoßverbindung ist aus EP 868 624 B1 bekannt. Bei dieser bekannten Stoßverbindung wird jeweils an den aneinanderstossenden Rohrenden ein Verbindungsflansch einstückig aus dem Material des Rohrendes angeformt. Diese Ausführungsart bringt gegenüber auf das Rohrende aufgesetzten getrennten Verbindungsflanschen große Vorteile, wie O-Leckage, geringeren Strömungswiderstand und geringe Geräuschbildung infolge glatter Innenwände sowie bessere Reinigungsmöglichkeit und Hygiene. Für diese Vorteile muss man allerdings die folgenden Nachteile in Kauf nehmen. Durch das einstückige Anformen der Verbindungsflansche ist die Wanddicke und damit die Stabilität des Verbindungsflansches zwangsweise an die Wanddicke des Rohres selbst gebunden. Wenn daher an die Stabilität der Flanschverbindung höhere Anforderungen gestellt werden, ist es unvermeidlich, die Wanddicke der Rohrabschnitte auf ihrer ganzen Länge zu erhöhen, obwohl diese Erhöhung für das Rohr selbst gar nicht nötig wäre. Bei auf das Rohrende aufgesetzten Verbindungsflanschen beträgt dementsprechend auch die Wanddicke immer auch ein Mehrfaches der Rohrwanddicke.

In dieser Erhöhung der Blechdicke auf der gesamten Rohrlänge liegt zweifellos ein großer wirtschaftlicher Nachteil, da die Materialkosten bei der Rohrfertigung den größten Kostenanteil bilden. Es gibt aber auch technische Nachteile, da die größere Rohrwanddicke das Rohrgewicht erhöht und die Aufhängung und Flanschverbindung stärker belastet. Die angeformten Verbindungsflansche unterliegen oft einer starken axialen Zugbelastung. Meist tritt dies bei senkrecht laufenden Rohrleitungen, oft aber auch bei waagerechten Rohrleitungen infolge des jeweils gewählten Abstandes zwischen zwei aufeinanderfolgenden Aufhängungen des Rohrs auf. Bei starker axialer Zugbelastung einer Stoßverbindung mit einstückig angeformten Verbindungsflanschen erweist sich der Scheitelpunkt, an welchem Verbindungsflansch und Rohr verbunden sind, als schwächster Punkt. Bei Überlastung entsteht somit an dieser Stelle ein konischer Spalt zwischen den aneinandergrenzenden Verbindungsflanschen. Ein solcher Spalt macht einige Vorteile der angeformten Verbindungsflansche zunichte. Das Rohrinnere ist nämlich bei dieser Spaltbildung nicht mehr durchgehend glatt. Im Spalt können sich demnach Fasern und Schmutz festsetzen und aufbauen. Dadurch wird der Strömungswiderstand, die Geräuschbildung und die Reinigungsmöglichkeit verschlechtert. Auch eine größere Leckage kann nur verhindert werden, wenn eine Dichtung am äußeren Flanschrand angebracht wird. Eine Vorspannung der Verbindungsflansche durch stärkere Abbiegung des ringförmig vom Flansch abstehenden Flanschteils um mehr als 90° bringt nur eine beschränkte Verbesserung der Flanschfestigkeit.

Dieser Schwachpunkt könnte natürlich mit der bekannten, verhältnismäßig neuen Technik der "Tailored Blanks" behoben werden. Bei Anwendung dieser Technik könnten an den Enden der Rohrabschnitte kurze Rohrstücke aus dickerem Material angeschweißt und aus diesen dann der Verbindungsflansch geformt werden. Diese mögliche Ausführungsform ist jedoch völlig unwirtschaftlich, denn es wäre dann sogar noch einfacher, gleich einen fertig gebogenen Verbindungsflansch anzuschweißen.

Eine Stoßverbindung nach dem Oberbegriff des Anspruchs 4 ist zum Beispiel aus GB-A-561 684 bekannt.

Durch die Erfindung soll eine Stoßverbindung der eingangs genannten Art so verbessert werden, dass Flanschdicke und Rohrwanddicke entkoppelt werden und dabei die Vorteile eines angeformten Verbindungsflansches uneingeschränkt erhalten bleiben.

Diese Aufgabe wird erfindungsgemäß hinsichtlich der Stoßverbindung durch die Merkmale des Anspruchs 4 und hinsichtlich des Verfahrens durch die Merkmale des Anspruchs 1 gelöst.

Die Unteransprüche betreffen vorteilhafte Ausgestaltungen der Erfindung.

Gemäß der Erfindung kann der unmittelbar an das Rohrende einstückig angeformte Verbindungsflansch ohne Erhöhung der Blechdicke des Rohrabschnitts in sehr einfacher Weise lediglich durch Aufschieben des den Verstärkungsring bildenden Rohrstücks auf die Außenseite des Rohres verstärkt werden. Erst nach dem Aufschieben des verstärkenden Rohrstücks wird an das Rohrende der Verbindungsflansch gemeinsam mit dem Verstärkungsring angeformt. Es entsteht somit ein zweilagiger Anformflansch. Da die Dicke des Verstärkungsrings so ausgelegt wird, dass die für den Anwendungsfall geforderte Flanschfestigkeit gewährleistet ist, tritt eine enorme Materialersparnis gegenüber einer Verdickung der gesamten Rohrwand ein. Nach dem Anformen des Verbindungsflansches mit dem Verstärkungsring liegt die aus der Rohrwand angeformte Flanschschicht immer nach außen, so dass alle Vorteile, wie O-Leckage, glatte Rohrinnenwand und glatte Flanschfläche, erhalten bleiben. Der Verstärkungsring muss in seiner Dicke lediglich so ausgelegt werden, dass auch bei erhöhter axialer Zugbelastung kein Spalt zwischen den Verbindungsflanschen entstehen kann.

Die Wirtschaftlichkeit bei der Anwendung der Erfindung resultiert im Wesentlichen aus der großen Materialersparnis, wenn die Dicke der Rohrwand nicht erhöht werden muss. Mit verhältnismäßig geringem zusätzlichem Aufwand lässt sich der Verstärkungsring aus Blech herstellen und auf das noch nicht bearbeitete Rohrende aufschieben. Das Anformen des einstückigen Verbindungsflansches einschließlich aufgesetztem Verstärkungsring lässt sich insbesondere durch das sogenannte Zirkular-Schwenkbiegeverfahren nach WO-A-02/24369 auch bei stärkstem Verstärkungsring problemlos durchführen.

Die Möglichkeit der beliebigen Verstärkung der Anformflansche ohne gleichzeitige Erhöhung der Rohrwanddicke eröffnet der erfindungsgemäßen Stoßverbindung viele neue Einsatzbereiche. Zahlreiche vorteilhafte Ausgestaltungen der Erfindung sind daher in den Unteransprüchen unter Schutz gestellt. Insbesondere können beliebige Formen der Verbindungsflansche, beispielsweise mit zur Rohrwand parallelem oder konisch verlaufendem Spannschenkel, mit einem oder mehreren Verstärkungsringen, die beliebigen Teilen oder dem ganzen Verbindungsflansch anliegen können, verwirklicht werden. Grundsätzlich ist es auch möglich, dass Rohr und Verstärkungsringe aus unterschiedlichen Materialien, beispielsweise das Rohr aus Aluminiumblech und der Verstärkungsring aus verzinktem Stahl oder dergl., hergestellt werden.

Anhand der Figuren werden Ausführungsformen der erfindungsgemäßen Stoßverbindung näher erläutert. Es zeigen:
Fig.1 einen axialen Teilschnitt durch eine erfindungsgemäße Stoßverbindung nach dem Festziehen eines auf die Verbindungsflansche aufgesetzten Spannrings,
Fig.2 eine Schrägansicht eines Endes eines Rohrabschnitts und eines den Verstärkungsring bildenden Rohrstücks vor dem Aufschieben desselben auf das Rohrende,
Fig.3 eine der Fig.2 entsprechende Schrägansicht nach dem Aufschieben des Verstärkungsrings auf das Rohrende,
Fig.4 einen Axialschnitt von Rohrende und Verstärkungsring nach dem Anformen eines konisch zur Rohrwand gebogenen Spannschenkels,
Fig.5 einen der Fig.4 entsprechenden Axialschnitt nach dem Anformen des nach außen stehenden Ringbordes des Verbindungsflansches,
Figuren 6 bis 13 verschiedene Ausführungsformen von an eine Rohrwand einstückig angeformten Verbindungsflansches im axialen Schnitt sowie
Figuren 14 bis 17 axiale Schnitte durch doppelwandige Rohrabschnitte mit einstückig an die Rohrenden der inneren Rohrwand angeformtem Verbindungsflansch bzw. an die äußere, vom Verstärkungsring gebildete Rohrwand angeformtem Verstärkungsringflansch.

In allen Figuren sind gleiche oder gleichartige Teile mit den gleichen Bezugszeichen versehen.

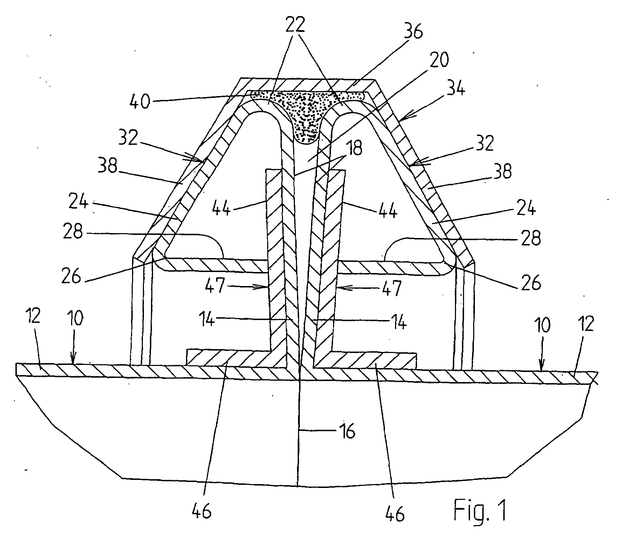

Wie aus Fig.1 ersichtlich, weist die dargestellte Stoßverbindung 2 allgemein mit 10 bezeichnete Rohrabschnitte aus Blech mit je einer Kanalwand 12 auf. An den aneinanderstoßenden Enden geht jede Rohrwand 12 soweit wie möglich scharfkantig in einen nach außen stehenden Ringbord 14 über, der mit der Rohrwand 12 jeweils einen Winkel von etwas weniger als 90°, vorzugsweise 87° bis 89°, einschließt. Wenn daher die inneren Enden der Ringborde 14 im Bereich der Rohrwände 12 längs einer engen Trennfuge 16 dicht aneinanderliegen, bildet sich zwischen den Stirnflächen 18 der beiden Ringborde 14 ein keilförmiger Spalt 20, der sich radial nach außen erweitert.

Das äußere Ende jedes Ringbordes 14 geht über eine Rundung 22 jeweils in einen nach rückwärts und innen zur zugehörigen Rohrwand 12 weisenden, konisch geneigten Spannschenkel 24 über. Das Innere, nahe der Rohrwand 12 liegende Ende jedes Spannschenkels 24 geht über eine Rundung 26 jeweils in einen im Abstand von der Rohrwand 12 parallel zu dieser zum Ringbord 14 hin verlaufenden Stützschenkel 28 über. An der Außenseite jedes Ringbords 14 bzw. an der Außenseite jeder Rohrwand 12 liegt je ein nach außen stehender Schenkel 44 bzw. parallel zur Rohrwand 12 verlaufender Schenkel 46 eines abgewinkelten Verstärkungsrings 47 an, der aus dickerem Blech besteht als die Rohrwände 12.

Die aneinandergrenzenden Verbindungsflansche 32 werden durch Aufsetzen eines allgemein ringförmigen Spannrings 34 mit rinnenförmigem Querschnitt und Festspannen des Spannrings 34 gegeneinandergezogen und unter Spannung gesetzt, so dass die Rohrwände 12 noch fester längs der Fuge 16 axial gegeneinandergepresst werden. Das Spannen des Spannrings kann in an sich bekannter Weise, z.B. durch Festziehen einer einzigen Schraube, sehr schnell erfolgen. Der in Fig.1 dargestellte Spannring 34 weist einen Rinnenboden 36 sowie zwei konische Seitenschenkel 38 auf, deren Konizität der Konizität der Spannschenkel 24 entspricht und die sich daher beim Festziehen des Spannrings 34 pressend an die Spannschenkel 24 anlegen.

An der Innenseite des Rinnenbodens 36 ist bei der dargestellten Ausführungsform eine umlaufende streifenförmige elastische Dichtung 40 befestigt, die beim Festziehen des Spannrings 34 in die in der Fig.1 gezeigte gespannte Lage auf die Außenseite der Rundungen 22 sowie in das äußere Ende des keilförmigen Spaltes 30 zwischen den Stirnflächen 18 der Ringborde 14 dichtend eingepresst wird. Zusätzlich zu der durch die stark aneinandergepressten inneren Enden der Ringborde 14 längs der Fuge 16 erzielten guten Abdichtung wird somit eine für praktische alle vorkommenden Fälle ausreichende Abdichtung erreicht.

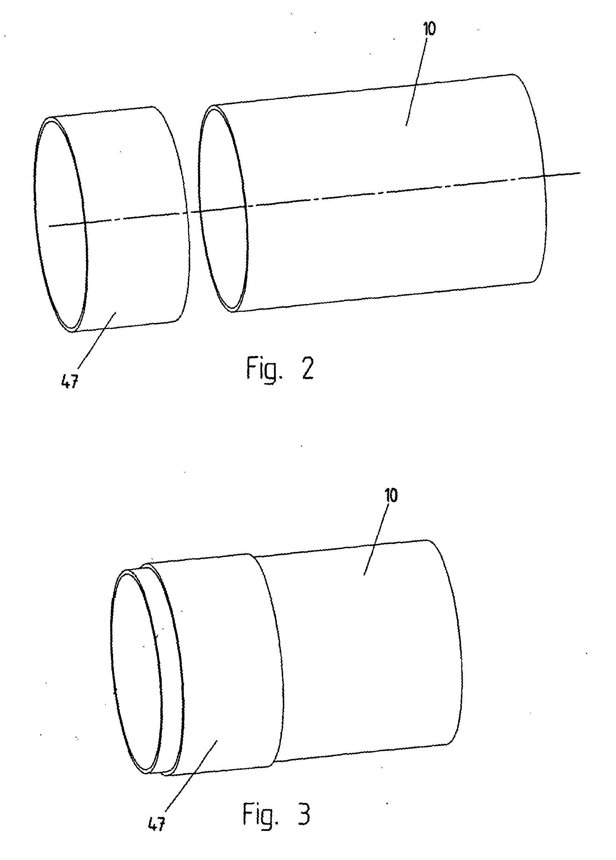

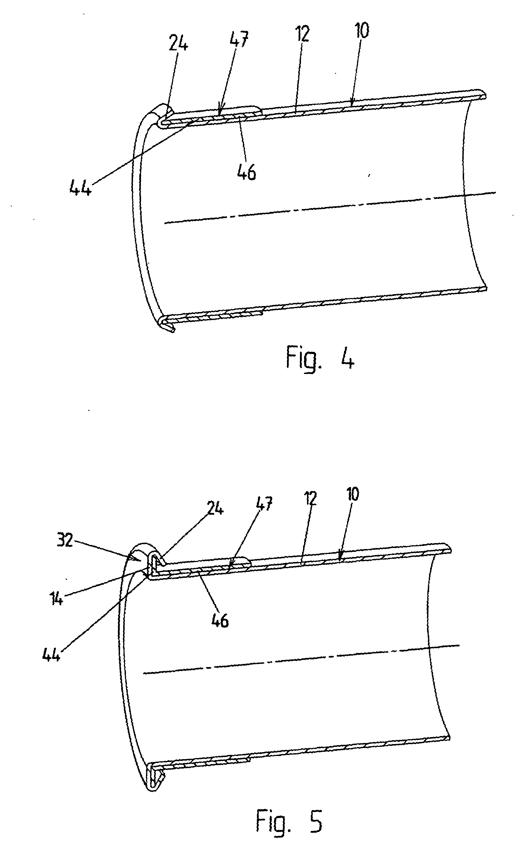

Fig.2 zeigt das Ende eines Rohrabschnitts 10 mit einem axial außerhalb des Endes angeordneten, als Verstärkungsring aufzubringendes kurzes Rohrstück 47. Fig.3 zeigt das Ende des Rohrabschnitts 10 nach dem Aufschieben des Verstärkungsrings 47, der durchgehend eng an der Außenseite des Rohrabschnitts 10 anliegt. Beim Aufschieben des Verstärkungsrings 47 wird vorzugsweise ein über den Verstärkungsring 47 axial vorstehender Ringbereich stehengelassen, der anschließend gemäß Fig.4 über das axiale Ende des Verstärkungsrings 47 zur Bildung des späteren Spannschenkels 24 konisch zurückgebogen wird. Nach Erreichen der in Fig.4 dargestellten Anformstufe wird eine abermalige Biegung, vorzugsweise mittels des bekannten Zirkular-Schwenkbiegeverfahrens, erzeugt, durch welche der nach außen stehende Ringbord 14 sowie der daran anliegende nach außen stehende Schenkel 44 des Verstärkungsrings gebildet wird. Die Ausführungsform gemäß Figuren 4 und 5 unterscheiden sich von der in Fig.1 gezeigten im Wesentlichen dadurch, dass der zur Rohrwand 12 parallel laufende Schenkel 46 des Verstärkungsrings 47 gemäß Fig.4 und 5 in Axialrichtung wesentlich länger ist als bei der Ausführungsform gemäß Fig.1.

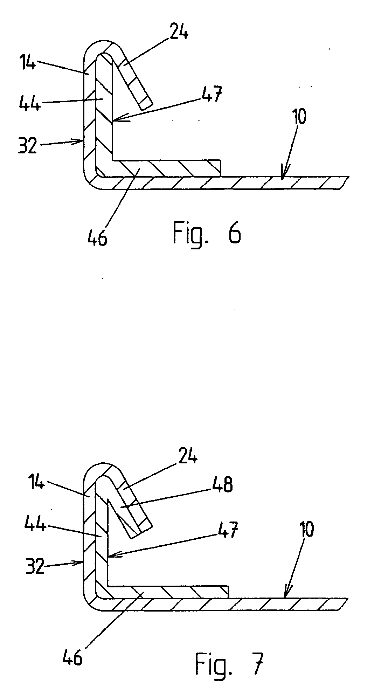

Die Längen der beiden Schenkel 44 und 46 können je nach Anwendungsfall und Festigkeitsanforderungen weitgehend frei gewählt werden. Das Gleiche gilt für die jeweils verwendete Form des angeformten Verbindungsflansches. So ist beispielsweise bei der Ausführungsform gemäß Fig.6 der nach außen abstehende Schenkel 44 des Verstärkungsring gerade so lange gewählt, dass er der Außenseite des Ringbordes 14 vollständig anliegt und der Spannschenkel 24 des Verbindungsflansches eng um das äußere Ende des Schenkels 44 gebogen ist. Ein zusätzlicher Stützschenkel 28, der gemäß Fig.1 vorgesehen ist, fehlt bei den Ausführungsformen gemäß Figuren 4 bis 7.

Fig.7 zeigt eine besonders leichte Ausführungsform, bei der die Blechdicke des Verstärkungsrings 47 kleiner oder höchstens gleich der Blechdicke des Rohrabschnitts 10 ist. Bei dieser Ausführungsform ist zusätzlich ein dritter, dem konisch nach innen gebogenen Spannschenkel 24 flächenhaft anliegender Schenkel 48 des Verstärkungsrings 47, der zusammen mit dem Spannschenkel 24 angeformt ist, vorgesehen.

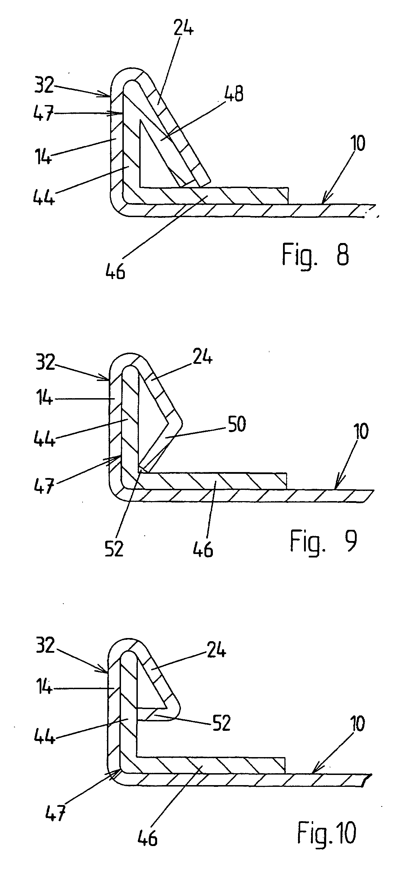

Eine der Ausführungsform der Fig.7 ähnliche Ausführungsform zeigt Fig.8, wobei lediglich die Blechstärke des Verstärkungsrings bezüglich der Blechstärke des Rohrabschnitts 10 wieder etwas erhöht ist. Zusätzlich ist hier der Spannschenkel 24 des Verbindungsflansches zusammen mit dem anliegenden Schenkel 48 des Verstärkungsrings soweit nach innen gegen die Wand des Rohrabschnitts 10 gezogen, dass sie beide an der Außenseite des Schenkels 46 des Verstärkungsrings anliegen. Dadurch ergibt sich eine besonders stabile Ausführungsform.

Bei der Ausführungsform gemäß Fig.9 ist der Schenkel 44 des Spannrings in gleicher Weise ausgebildet wie bei der Ausführungsform gemäß Fig.6, während der Spannschenkel 24 einen abgeknickten Abschnitt 50 besitzt, so dass das innere Ende des abgeknickten Schenkels 50 im Biegefalz 52 zwischen den beiden Schenkeln 44 und 46 des Verstärkungsrings 47 abstützend anliegt.

Bei einer weiteren Ausführungsform gemäß Fig.10 ist der abgeknickte Schenkel 52 des Spannschenkels 24 parallel zur Wandung des Rohrabschnitts 10 gebogen, so dass er sich etwa in der Mitte des Schenkels 44 des Verstärkungsrings 47 abstützt.

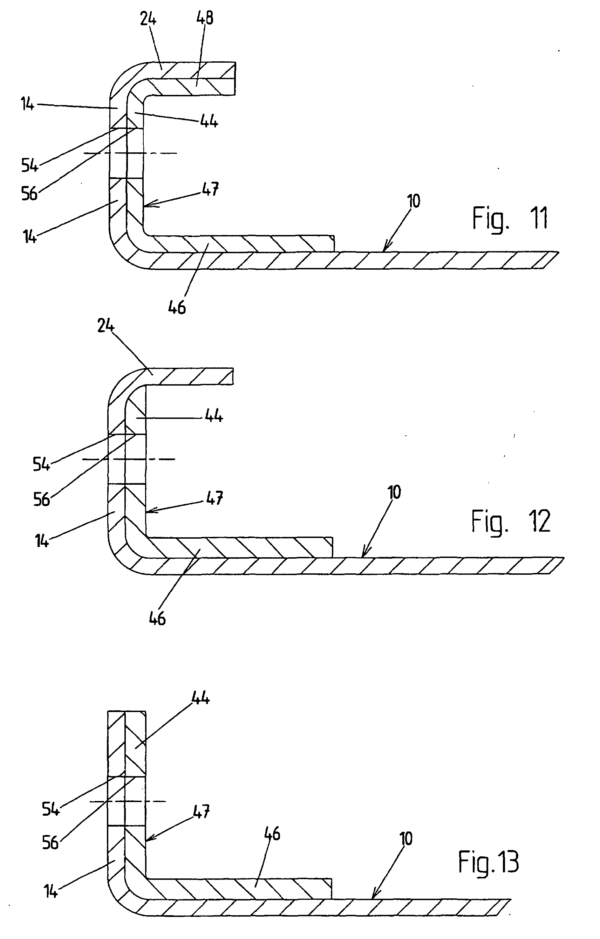

Einfachere Ausführungsformen des Verbindungsflansches 32 mit Verstärkungsring 47 sind in den Figuren 11 bis 13 dargestellt. Bei diesen Ausführungsformen erfolgt die Verbindung der beiden Verbindungsflansche nicht durch einen Spannring, wie er in Fig.1 gezeigt ist, sondern durch eine nicht gezeigte Schraubverbindung, welche in an sich bekannter Weise jeweils durch miteinander fluchtende Schraublöcher 54 bzw. 56 im Ringbord 14 bzw. Schenkel 44 des Verstärkungsrings 47 geführt ist. Der dem Spannschenkel entsprechende Schenkel 24 und der daran anliegende Schenkel 48 des Verstärkungsrings 47 liegen bei dieser Ausführungsform parallel zur Rohrwand des Rohrabschnitts 10. Durch die Einsparung eines besonderen Spannrings ergibt sich hierbei wiederum eine Gewichtseinsparung gegenüber den vorhergehenden Ausführungsformen.

Etwas schwerer und demgemäß fester ist die Ausführungsform gemäß Fig.12, wobei die Blechstärke des Verstärkungsrings 47 wieder etwas größer gewählt ist. Der Verstärkungsring weist daher aber lediglich einen nach außen stehenden Schenkel 44 und keinen nach rückwärts gebogenen Schenkel 48 auf.

Fig.13 zeigt eine besonders einfache Ausführungsform für Schraubverbindung, bei der sowohl der Verbindungsflansch nur einen Ringbord 14 als auch der Verstärkungsring nur einen dem Ringbord anliegenden Schenkel 44 besitzt. Für viele Anwendungsfälle genügt eine so einfache und somit auch leichte Ausführungsform. Der Verstärkungsring 47 kann dabei natürlich in weitgehend beliebiger Stärke ausgeführt werden.

Ausführungsformen, bei denen sich der Verstärkungsring 47 über die ganze Länge des jeweiligen Rohrabschnitts oder bei denen zwei oder mehrere Verstärkungsringe am Rohrende übereinandergeschoben sind, sind in den Figuren zwar nicht dargestellt, können in Extremfällen aber eine zulässige Ausbildung im Rahmen der Patentansprüche darstellen, wenn besondere Festigkeitsanforderungen gestellt werden oder das Gewicht des Rohrabschnitts vernachlässigt werden kann.

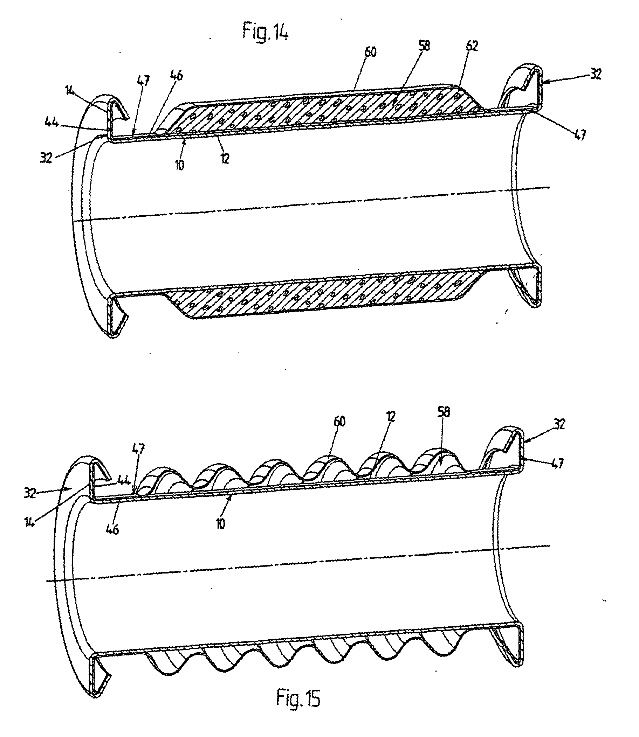

Besonders vorteilhafte Ausführungsformen ergeben sich, wenn der jeweilige Rohrabschnitt 10 durch Erstreckung des Verstärkungsrings 47 über die ganze axiale Länge des Rohrabschnitts 10 doppelwandig ausgeführt wird, insbesondere, wenn, wie in den Ausführungsformen gemäß den Figuren 14 bis 17 der Verstärkungsring 47 im größten Teil der axialen Länge des zugehörigen Rohrabschnitts im Abstand von der Rohrwand 12 geführt ist, so dass sich ein Zwischenraum 58 zwischen der Rohrwand 12 und dem entsprechenden Abschnitt 60 des Verstärkungsrings ergibt. Dieser Zwischenraum 58 kann zur Bildung eines Rohrschalldämpfers mit Schalldämmmaterial 62 ausgefüllt werden. Bei der Anwendung als Schalldämpfer wird die Rohrwand 12 gelocht ausgeführt. Das Material 62 kann z.B. aus Glaswolle oder dergl. bestehen.

Fig.15 zeigt die Ausbildung eines Rohrabschnitts 10 als für die Erdverlegung eines Blechrohrs geeigneten Druckrohrs, bei welchem der Abschnitt 60 des Verstärkungsrings 47, der im Abstand von der Rohrwand 12 verläuft, in Längsrichtung des Rohrabschnitts 10 gewellt verläuft. Wegen der erforderlichen Rostfestigkeit werden der Rohrabschnitt 10 und/oder der Verstärkungsring 47 aus verzinktem Stahl oder ähnlich beständigem Material hergestellt. Die Wellrohre dienen insbesondere der Aufnahme des auftretenden Drucks.

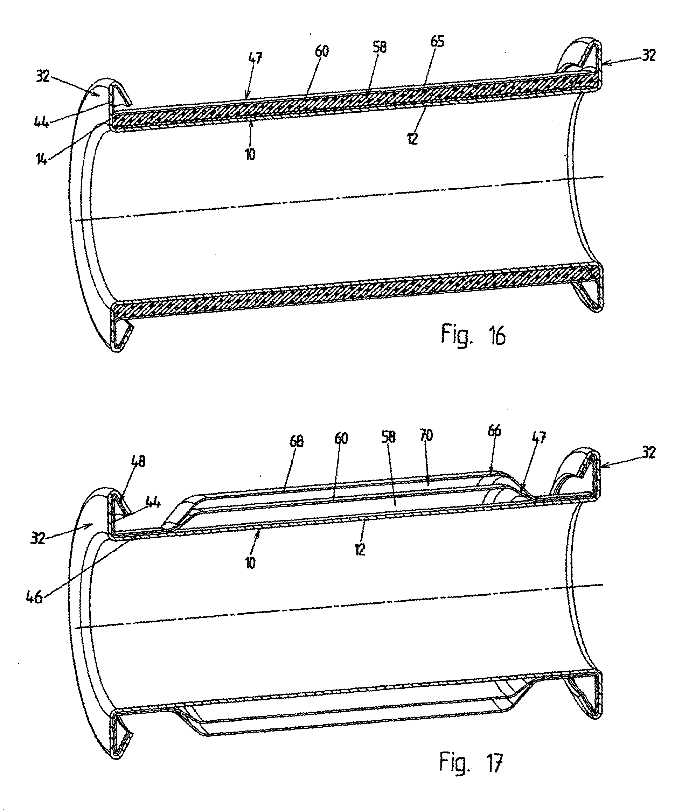

Bei der Ausführungsform gemäß Fig.16 ist der Zwischenraum 58, der sich praktisch über die gesamte Länge des Rohrabschnitts 10 erstreckt, mit Isoliermaterial 65 ausgefüllt. Ein an der Rohrwandung 12 anliegender Abschnitt 46 des Verstärkungsrings 47 ist bei dieser Ausführungsform nicht vorgesehen.

Schließlich sind bei der Ausführungsform gemäß Fig.17 ein innerer Verstärkungsring 47 und ein äußerer Verstärkungsring 66 derart übereinandergelegt, dass über den größten Teil der Längserstreckung des Rohrabschnitts 10 die Abschnitte 60 und 68 jeweils im Abstand von der Rohrwand 12 sowie in gegenseitigem Abstand voneinander verlaufen. Dadurch werden zwei Zwischenräume 58 bzw. 70 gebildet. Angrenzend an die Verbindungsflansche 32 sowie in den Verbindungsflanschen selbst sind daher die an der Rohrwand 12 bzw. an der Außenseite der Verbindungsflansche 32 anliegenden Schenkel 46,44,48 der Verstärkungsringe 47 und 66 jeweils doppelwandig ausgebildet. Mehrwandige Rohrabschnitte im Sinne der Ausführungsform der Fig.17 können beispielsweise zur Verwendung in der chemischen Verfahrenstechnik angewendet werden, wobei die einzelnen Rohre bzw. Verstärkungsringe auch aus verschiedenen Materialien je nach Erfordernis hergestellt werden können.

Auch in der Sicherheitstechnik sind mehrwandige Rohre erforderlich, wobei der bzw. die Hohlräume mit einer Kontrollflüssigkeit gefüllt werden können. Das Austreten der Kontrollflüssigkeit kann als Indiz für eine Undichtheit verwendet werden.

Die Verwendung mehrwandiger Rohre dieser Art kann auch in der Kühltechnik vorteilhaft erfolgen.

## Patentansprüche

1. Verfahren zur Herstellung eines an einem Ende eines Rohrabschnittes (10) aus Blech mit kreisrundem oder flachovalem Querschnitt einstückig ausgebildeten Verbindungsflansches (32), welcher wenigstens einen von der Rohrwand (12) nach außen abstehenden Ringbord (14) aufweist, **dadurch gekennzeichnet, dass** auf das Ende des Rohrabschnittes (10) ein kürzeres, als Verstärkungsring (47) dienendes, an dem Rohrabschnitt (10) anliegendes Rohrstück so weit aufgeschoben wird, dass der Rohrabschnitt (10) den Verstärkungsring (47) axial mit einem Ringbereich überragt, welcher anschließend zur Bildung des Ringbords (14) gemeinsam mit einem Schenkel (44) des Verstärkungsrings (47) nach außen gebogen wird.

2. Verfahren nach Anspruch 1, **dadurch gekennzeichnet, dass** vor dem Anformen des Ringbords (14) an dessen äußeres Ende ein Spannschenkel (24) ohne oder gemeinsam mit einem Schenkel (48) des Verstärkungsrings (47) angeformt wird.

3. Verfahren nach Anspruch 1 oder 2, **dadurch gekennzeichnet, dass** das Anformen mittels eines Zirkular-Schwenkbiegeverfahrens erfolgt.

4. Stoßverbindung zwischen zwei Rohrabschnitten (10), die jeweils wenigstens an einem Ende einen einstückig mit der angrenzenden Rohrwand (12) ausgebildeten Verbindungsflansch (32) aufweisen, wobei die Verbindungsflansche (32) durch eine sie in Axialrichtung der Rohrabschnitte (10) zusammenhaltende Spanneinrichtung (34) fest zusammengehalten sind, wobei am Ende jedes Rohrabschnitts (10) an dessen Außenseite und wenigstens an einem radial inneren Teil jedes Ringbordes (14) ein einstückiger Verstärkungsring (47) aus Blech anliegt, **dadurch gekennzeichnet, dass** jeder Verbindungsflansch (32) nach dem Verfahren gemäß Anspruch 1, 2 oder 3 hergestellt ist.

5. Stoßverbindung nach Anspruch 4, **dadurch gekennzeichnet, dass** die Spanneinrichtung aus einer durch Öffnungen (54, 56) benachbarter Ringborde (14) und ggf. daran anliegender Verstärkungsringschenkel (44) geführten Schraubverbindungen besteht.

6. Stoßverbindung nach Anspruch 4 oder 5, **dadurch gekennzeichnet, dass** jeder Verbindungsflansch (32) einen vom äußeren Ende des Ringbordes (14) konisch zur angrenzenden Rohrwand (12) zurückweisenden Spannschenkel (24) aufweist und dass die Spanneinrichtung (34) aus einem auf die Verbindungsflansche (32) aufgesetzten, mit konischen Seitenschenkeln (38) an den Spannschenkel (24) der Verbindungsflansche (32) anliegenden Spannring besteht.

7. Stoßverbindung nach einem der Ansprüche 4 bis 6, **dadurch gekennzeichnet, dass** der Verstärkungsring (47) am gesamten Ringbord (14) anliegt.

8. Stoßverbindung nach Anspruch 7, **dadurch gekennzeichnet, dass** der Verstärkungsring (47) am angrenzenden Spannschenkel (24) anliegt.

9. Stoßverbindung nach einem der Ansprüche 4 bis 8, **dadurch gekennzeichnet, dass** die Blechdicke des Verstärkungsrings (47) größer ist als die Blechdicke des zugehörigen Rohrabschnitts (10).

10. Stoßverbindung nach einem der Ansprüche 4 bis 9, **dadurch gekennzeichnet, dass** der Verstärkungsring (47) aus zwei oder mehr Blechschichten besteht.

11. Stoßverbindung nach Anspruch 10, **dadurch gekennzeichnet, dass** der Verstärkungsring (47) nur teilweise zwei- oder mehrschichtig ist.

12. Stoßverbindung nach Anspruch 4 oder 5 oder einem der Ansprüche 7 bis 11, **dadurch gekennzeichnet, dass** jeder Verbindungsflansch (32) einen vom äußeren Ende des Ringbordes (14) abstehenden, parallel zur Rohrwand (12) von der Stoßverbindung wegweisenden Spannschenkel (24) aufweist.

13. Stoßverbindung nach einem der Ansprüche 4 bis 12, **dadurch gekennzeichnet, dass** sich der Verstärkungsring (47) über die ganze axiale Länge des Rohrabschnitts (10) erstreckt.

14. Stoßverbindung nach Anspruch 13, **dadurch gekennzeichnet, dass** der Verstärkungsring (47) im größten Teil der axialen Länge des Rohrabschnitts (10) einen radialen Abstand von der Rohrwand (12) einhält, wodurch ein Zwischenraum (58,70) gebildet wird.

15. Stoßverbindung nach Anspruch 14, **dadurch gekennzeichnet, dass** der Zwischenraum (58) zwischen Rohrwand (12) und Verstärkungsring (47) mit Dämmmaterial (62) oder Isoliermaterial (65) ausgefüllt ist.

16. Stoßverbindung nach Anspruch 15, **dadurch gekennzeichnet, dass** der Zwischenraum (64) zur Rohrwandung (12) hin durch ein Lochblech (64) abgeschlossen ist.

17. Stoßverbindung nach einem der Ansprüche 14 bis 16, **dadurch gekennzeichnet, dass** der Verstärkungsring (47) derart gewellt ist, dass der Abstand zwischen Verstärkungsringabschnitt (60) und Rohrwand (12) über die Länge des Rohrabschnitts (10) veränderlich ist.

18. Stoßverbindung nach einem der Ansprüche 14 bis 17, **dadurch gekennzeichnet, dass** ein zweiter Verstärkungsring (47) sich über die ganze axiale Länge des Rohrabschnitts (10) erstreckt und im größten Abschnitt (68) der axialen Länge des Rohrabschnitts (10) einen radialen Abstand vom ersten Verstärkungsring (47) in dessen längstem Abschnitt (60) einhält, so dass ein zweiter Zwischenraum (70) gebildet wird.

## Claims

1. Method of producing a connecting flange (32) formed in one piece at one end of a pipe section (10) made of sheet metal having a circular or oval cross section, which connecting flange has at least one annular rim (14) projecting outwards from the pipe wall (12), **characterized in that** a shorter pipe piece which serves as a reinforcing ring (47) and bears against the pipe section (10) is pushed onto the end of the pipe section (10) until the pipe section (10) protrudes axially beyond the reinforcing ring (47) with an annular region which is then bent outwards together with a flank (44) of the reinforcing ring (47) to form the annular rim (14).

2. Method according to Claim 1, **characterized in that**, before the annular rim (14) is formed, a clamping flank (24) is formed on the outer end thereof without or together with a flank (48) of the reinforcing ring (47).

3. Method according to Claim 1 or 2, **characterized in that** the forming takes place by means of a circular pivot-bending process.

4. Butt joint between two pipe sections (10) which each have at least at one end a connecting flange (32) formed in one piece with the adjoining pipe wall (12), wherein the connecting flanges (32) are held together by a clamping device (34) which holds them together in the axial direction of the pipe sections (10), wherein a one-piece reinforcing ring (47) made of sheet metal bears against the end of each pipe section (10) on the outer side thereof and at least against one radially inner part of each annular rim (14), **characterized in that** each connecting flange (32) is produced in accordance with the method according to Claim 2 or 3.

5. Butt joint according to Claim 4, **characterized in that** the clamping device consists of screw connections guided through openings (54, 56) of adjacent annular rims (14) and possibly through reinforcing ring flanks (44) bearing against said annular rims.

6. Butt joint according to Claim 4 or 5, **characterized in that** each connecting flange (32) has a clamping flank (24) which from the outer end of the annular rim (14) is turned back conically towards the adjoining pipe wall (12), and **in that** the clamping device (34) consists of a clamping ring which is placed on the connecting flanges (32) and bears with conical side flanks (38) against the clamping flanks (24) of the connecting flanges (32).

7. Butt joint according to one of Claims 4 to 6, **characterized in that** the reinforcing ring (47) bears against the entire annular rim (14).

8. Butt joint according to Claim 7, **characterized in that** the reinforcing ring (47) bears against the adjoining clamping flank (24).

9. Butt joint according to one of Claims 4 to 8, **characterized in that** the sheet metal thickness of the reinforcing ring (47) is greater than the sheet metal thickness of the associated pipe section (10).

10. Butt joint according to one of Claims 4 to 9, **characterized in that** the reinforcing ring (47) consists of two or more sheet metal layers.

11. Butt joint according to Claim 10, **characterized in that** the reinforcing ring (47) only partially consists of two or more layers.

12. Butt joint according to Claim 4 or 5 or one of Claims 7 to 11, **characterized in that** each connecting flange (32) has a clamping flank (24) which projects from the outer end of the annular rim (13) and points away from the butt joint in a direction parallel to the pipe wall (12).

13. Butt joint according to one of Claims 4 to 12, **characterized in that** the reinforcing ring (47) extends over the entire axial length of the pipe section (10).

14. Butt joint according to Claim 13, **characterized in that** the reinforcing ring (47) maintains a radial distance from the pipe wall (12) in the greatest part of the axial length of the pipe section (10), as a result of which an intermediate space (58, 70) is formed.

15. Butt joint according to Claim 14, **characterized in that** the intermediate space (58) between the pipe wall (12) and the reinforcing ring (47) is filled with damping material (62) or insulating material (65).

16. Butt joint according to Claim 15, **characterized in that** the intermediate space (64) is closed off towards the pipe wall (12) by a perforated sheet (64).

17. Butt joint according to one of Claims 14 to 16, **characterized in that** the reinforcing ring (47) is corrugated in such a manner that the distance between the reinforcing ring portion (60) and the pipe wall (12) varies over the length of the pipe section (10).

18. Butt joint according to one of Claims 14 to 17, **characterized in that** a second reinforcing ring (47) extends over the entire axial length of the pipe section (10) and in the greatest portion (68) of the axial length of the pipe section (10) maintains a radial distance from the first reinforcing ring (47) in the longest portion (60) thereof, so that a second intermediate space (70) is formed.

## Revendications

1. Procédé de fabrication d'une bride d'assemblage (32) formée d'un seul tenant à une extrémité d'un segment de tube (10) en tôle avec une section transversale circulaire ou ovale plate, qui présente au moins un bord annulaire (14) saillant de la paroi de tube (12) vers l'extérieur,
**caractérisé en ce que**
sur l'extrémité du segment de tube (10) on fait glisser un tronçon de tube plus court servant de bague de renforcement (47) appliquée contre le segment de tube (10), le segment de tube (10) dépasse de la bague de renforcement (47) axialement par une zone annulaire, qui pour former le bord annulaire (14), est ensuite pliée vers l'extérieur conjointement avec une branche (44) de la bague de renforcement (47).

2. Procédé selon la revendication 1,
**caractérisé en ce qu'**
avant le formage du bord annulaire (14) une branche de serrage (24) est rapportée à l'extrémité extérieure de celui-ci sans ou conjointement avec une branche (48) de la bague de renforcement (47).

3. Procédé selon la revendication 1 ou 2,
**caractérisé en ce que**
le formage s'effectue au moyen d'un procédé de pliage circulaire.

4. Joint abouté entre deux segments de tube (10) qui présentent respectivement à au moins une extrémité une bride d'assemblage (32) formée d'un seul tenant avec la paroi de tube (12) adjacente, les brides d'assemblage (32) étant maintenues serrées l'une contre l'autre par un dispositif de serrage (34) les serrant dans la direction axiale de segments de tube (10), à l'extrémité de chaque segment de tube (10) une bague de renforcement (47) en tôle d'un seul tenant étant appliquée contre la face extérieure de celui-ci et au moins contre une partie intérieure radiale de chaque bord annulaire (14),
**caractérisé en ce que**
chaque bride d'assemblage (32) est fabriquée d'après le procédé selon la revendication 1, 2 ou 3.

5. Joint abouté selon la revendication 4,
**caractérisé en ce que**
le dispositif de serrage est composé de vis guidées à travers des ouvertures (54, 56) prévues dans des bords annulaires (14) voisins et le cas échéant des branches de bague de renforcement (44).

6. Joint abouté selon la revendication 4 ou 5,
**caractérisé en ce que**
chaque bride d'assemblage (32) présente une branche de serrage (24) s'étendant de façon conique depuis l'extrémité extérieure du bord annulaire (14) vers la paroi de tube (12) adjacente, et le dispositif de serrage (34) est une bague de serrage placée sur les brides d'assemblage (32) et appliquée par des branches latérales (38) coniques contre la branche de serrage (24) des brides d'assemblage (32).

7. Joint abouté selon l'une quelconque des revendications 4 à 6,
**caractérisé en ce que**
la bague de renforcement (47) est appliquée contre le bord annulaire (14) entier.

8. Joint abouté selon la revendication 7,
**caractérisé en ce que**
la bague de renforcement (47) est appliquée contre la branche de serrage (24) adjacente.

9. Joint abouté selon l'une quelconque des revendications 4 à 8,
**caractérisé en ce que**
l'épaisseur de tôle de la bague de renforcement (47) est supérieure à celle du segment de tube (10) associé.

10. Joint abouté selon l'une quelconque des revendications 4 à 9,
**caractérisé en ce que**
la bague de renforcement (47) est composée de deux ou plusieurs couches de tôle.

11. Joint abouté selon la revendication 10,
**caractérisé en ce que**
la bague de renforcement (47) ne présente que partiellement deux ou plusieurs couches.

12. Joint abouté selon la revendication 4 ou 5 ou l'une quelconque des revendications 7 à 11,
**caractérisé en ce que**
chaque bride d'assemblage (32) présente une branche de serrage (24) saillant de l'extrémité extérieure du bord annulaire (14) s'éloignant du joint abouté parallèlement à la paroi de tube (12).

13. Joint abouté selon l'une quelconque des revendications 4 à 12,
**caractérisé en ce que**
la bague de renforcement (47) s'étend sur toute la longueur axiale du segment de tube (10).

14. Joint abouté selon la revendication 13,
**caractérisé en ce que**
sur la plus grande partie de la longueur axiale du segment de tube (10) la bague de renforcement (47) respecte une distance radiale par rapport à la paroi de tube (12) formant ainsi un espace intermédiaire (58, 70).

15. Joint abouté selon la revendication 14, **caractérisé en ce que** l'espace intermédiaire (58) entre la paroi de tube (12) et la bague de renforcement (47) est rempli d'un matériau atténuant les vibrations (62) ou d'un matériau isolant (65).

16. Joint abouté selon la revendication 15,
**caractérisé en ce qu'**
en direction de la paroi de tube (12) l'espace intermédiaire (64) est fermé par une tôle perforée (64).

17. Joint abouté selon l'une quelconque des revendications 14 à 16,
**caractérisé en ce que**
la bague de renforcement (47) est ondulée de telle sorte que la distance entre le segment de bague de renforcement (60) et la paroi de tube (12) soit variable en agissant sur la longueur du segment de tube (10).

18. Joint abouté selon l'une quelconque des revendications 14 à 17,
**caractérisé en ce qu'**
une deuxième bague de renforcement (47) s'étend sur toute la longueur axiale du segment de tube (10) et respecte, sur son plus grand segment (58), une distance radiale par rapport à la première bague de renforcement (47) sur son segment (60) le plus long pour ainsi former un deuxième espace intermédiaire (70).
